(19) Europäisches Patentamt / European Patent Office / Office européen des brevets

(11) **EP 4 682 176 A1**

(12) **EUROPEAN PATENT APPLICATION**

(43) Date of publication:
21.01.2026 Bulletin 2026/04

(21) Application number: 24189156.3

(22) Date of filing: 17.07.2024

(51) International Patent Classification (IPC):
*C08F 2/00* (2006.01)     *C08K 5/098* (2006.01)
*C08L 23/14* (2006.01)     *C08F 210/06* (2006.01)

(52) Cooperative Patent Classification (CPC):
(C-Sets available)
C08F 210/06; C08K 5/0083                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **WANG, Jingbo**
  **4021 Linz (AT)**
• **TRANNINGER, Cornelia Anita**
  **4021 Linz (AT)**
• **GAHLEITNER, Markus**
  **4021 Linz (AT)**
• **DOSHEV, Petar Emilov**
  **4021 Linz (AT)**

(74) Representative: **Maiwald GmbH**
**Elisenhof**
**Elisenstraße 3**
**80335 München (DE)**

(54) **ZINC ADIPATE-NUCLEATED PROPYLENE-ETHYLENE RANDOM COPOLYMER COMPOSITIONS**

(57)     A polypropylene composition comprising a monophasic propylene-ethylene random copolymer (PP) and zinc adipate.

**Figure 1**     Pipe performance data for IE1

(52) Cooperative Patent Classification (CPC): (Cont.)

C-Sets
**C08F 210/06, C08F 2/001;**
**C08K 5/098, C08L 23/14;**
C08F 210/06, C08F 210/16, C08F 2500/12,
C08F 2500/20, C08F 2500/27, C08F 2500/31,
C08F 2500/33, C08F 2500/34, C08F 2500/35,
C08F 2500/30;
C08F 210/06, C08F 210/16, C08F 2500/12,
C08F 2500/27, C08F 2500/35

**Description**

**Field of the Invention**

The present invention is directed to a polypropylene composition comprising a monophasic propylene-ethylene random copolymer and zinc adipate, a process for forming said polypropylene composition (PC) and an article comprising said polypropylene composition.

**Background to the Invention**

When cooling from a melt, polypropylene typically crystallizes into the monoclinic α-crystalline form. In addition to this α-form, polypropylene may also crystallize in the hexagonal β-crystalline form and the orthorhombic γ-crystalline form. The metastable β-form is typically characterised by improved impact strength and crack growth retention, which is advantageous for a number of applications, such as in pipes and fittings, but also in profiles and ducts, automotive parts and other technical articles.

Typically, β-crystallisation is achieved through the addition of specific β-nucleating agents, such as quinacridone pigments (e.g. in EP 0 177 961 A2), amide compounds (e.g. NJstar NU-100, N,N'-dicyclohexyl-2,6-naphthalene dicarboxamide) and, more recently, heteronuclear rare earth complexes such as WBG (as originally disclosed in Xiao W. et al, J. Appl. Polym. Sci., 111, 1076-1085 (2009)).

It is also known that calcium salts of certain simple dibasic acids (such as pimelic acid and suberic acid, as in WO 2008/074494 A1) can perform well as β-nucleating agents, though these salts can be very sensitive to traces of water and other difficult to control parameters.

Whilst a number of β-nucleating agents are known in the art, they are somewhat unreliable when used in industrial processes. Quinacridone pigments furthermore introduce colour to polymer compositions, which is often not desired, depending on the end use of the composition.

Furthermore, many β-nucleating agents may be effective for some polypropylene materials and less effective for other polypropylene materials. When developing new β-nucleating agents, it is typical to test their effectiveness for nucleating propylene homopolymers, whereas far less attention is paid to the nucleation of propylene copolymers, such as propylene-ethylene random copolymers.

As such, further β-nucleating agents having high efficiency, reliability and avoiding pigmentation that are effective for polymers other than propylene homopolymers are desired in the field of polypropylene development.

**Summary of the Invention**

The present invention is based on the observation that zinc adipate is a particularly effective β-nucleating agent for propylene-ethylene random copolymers.

In a first aspect, the present invention is directed to a polypropylene composition (PC) comprising:

a) a monophasic propylene-ethylene random copolymer (PP) having:

i) a melt flow rate (MFR$_2$), determined according to ISO 1133 at 230 °C at a load of 2.16 kg, in the range from 0.10 to 1.00 g/10 min;
ii) a content of 2,1-regiodefects, as determined by $^{13}$C-NMR spectroscopy, in the range from 0.00 to 0.11 mol-%;
iii) an ethylene content (C2), determined by quantitative $^{13}$C-NMR spectroscopy, in the range from 2.0 to 6.0 wt.-%, relative to the total weight of the monophasic propylene-ethylene random copolymer (PP);
iv) a relative content of isolated to block ethylene sequences, I(E), in the range from 45 to 80%,

wherein the I(E) content is defined by equation (I):

$$I(E) = \frac{fPEP}{(fEEE + f\text{PEE} + fPEP)} \times 100 \qquad (I)$$

wherein
I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample;

wherein all sequence concentrations being based on a statistical triad analysis of $^{13}$C-NMR data, and

b) zinc adipate (ZnAA).

In a second aspect, the present invention is directed to a process for producing the polypropylene composition (PC) of the first aspect, comprising the steps of:

a) providing the monophasic propylene-ethylene random copolymer (PP) of the first aspect; and
b) mixing adipic acid with with a zinc source selected from the group consisting of zinc oxide, zinc hydroxide, zinc carbonate and combinations thereof thereby generating zinc adipate (ZnAA); and
c) blending and extruding the monophasic propylene-ethylene random copolymer (PP) of step a) with the zinc adipate (ZnAA) of step b) and optionally further additives (A) at a temperature in the range from 160 to 280 °C in an extruder, preferably a twin-screw extruder, thereby generating the polypropylene composition (PC), preferably in pellet form.

In a final aspect, the present invention is directed to an article comprising at least 90 wt.-%, relative to the total weight of the article, of the polypropylene composition (PC) of the first aspect.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

All references to standardised measurement methods, such as ISO standards, used throughout the present specification are to be interpreted as preferably referring to the specific version (i.e. publication date) of said standardised measurement method in the determination methods section (e.g. ISO 1133 (2022)).

According to the present invention, the expression "propylene homopolymer" relates to a polypropylene that consists substantially, i.e. of at least 99.5 mol-%, more preferably of at least 99.8 mol-%, like of at least 99.9 mol-%, of propylene units. In another embodiment, only propylene units are detectable, i.e. only propylene has been polymerized.

A propylene random copolymer is a copolymer of propylene monomer units and comonomer units, preferably selected from ethylene and $C_4$-$C_{12}$ alpha-olefins, in which the comonomer units are distributed randomly over the polymeric chain. The propylene random copolymer can comprise comonomer units from one or more comonomers different in their amounts of carbon atoms. In the following amounts are given in mol-% unless it is stated otherwise. A propylene random copolymer must contain at least 50 mol-% propylene units.

Typical for propylene homopolymers and propylene random copolymers is the presence of only one glass transition temperature.

**Detailed Description**

**The polypropylene composition (PC)**

In a first aspect, the present invention is directed to a polypropylene composition (PC) comprising:

a) a monophasic propylene-ethylene random copolymer (PP),and
b) zinc adipate (ZnAA).

It is preferred that the total contents of the monophasic propylene-ethylene random copolymer (PP) and the zinc adipate are at least 90 wt.-%, more preferably at least 95 wt.-%, most preferably at least 98 wt.-%, relative to the total weight of the polypropylene composition (PC).

It is preferred that the polypropylene composition (PC) has a melt flow rate (MFR$_2$), determined according to ISO 1133 at 230 °C at a load of 2.16 kg, in the range from 0.10 to 4.00 g/10 min, more preferably in the range from 0.15 to 1.00 g/10 min, most preferably in the range from 0.17 to 0.50 g/10 min.

It is preferred that the polypropylene composition (PC) has a flexural modulus, determined according to ISO 178 using $80 \times 10 \times 4$ mm$^3$ test bars injection moulded in line with ISO 19069-2, in the range from 750 to 1500 MPa, more preferably in the range from 800 to 1300 MPa, most preferably in the range from 850 to 1100 MPa.

It is preferred that the polypropylene composition (PC) has a Charpy notched impact strength (NIS), determined at +23 °C according to ISO 179/1eA using $80 \times 10 \times 4$ mm$^3$ test bars injection moulded in line with ISO 19069-2, in the range from 10.0 to 100.0 kJ/m$^2$, more preferably in the range from 20.0 to 80.0 kJ/m$^2$, most preferably in the range from 30.0 to 60.0 kJ/m$^2$.

It is preferred that the polypropylene composition (PC) has a crystallisation temperature ($T_c$), determined according to ISO 11357, in the range from 107.0 to 120.0 °C, more preferably in the range from 107.0 to 116.0 °C, most preferably in the range from 108.0 to 112.0 °C.

It is preferred that the polypropylene composition (PC) has a beta phase content (DSC), as determined according to the procedure given in the determination methods, in the range from 60 to 90%, more preferably in the range from 65 to 85%, most preferably in the range from 68 to 80%.

The beta phase content (DSC) is calculated by dividing the enthalpy of fusion that corresponds to the beta phase with the sum of the enthalpy of fusion that corresponds to the beta phase and the enthalpy of fusion that corresponds to the alpha phase.

It is preferred that the polypropylene composition (PC) has a beta phase content ($K_\beta$), determined by wide angle x-ray scattering (WAXS) on a specimen as defined in the determination methods, in the range from 60 to 99%, more preferably in the range from 63 to 95%, most preferably in the range from 65 to 90%.

It is preferred that the polypropylene composition (PC) has a crystallinity index Xc, determined by wide angle x-ray scattering (WAXS) on a specimen as defined in the determination methods, in the range from 50 to 70%, more preferably in the range from 53 to 65%, most preferably in the range from 55 to 60%.

It is also preferred that the polypropylene composition (PC) is unpigmented. In other words, the polypropylene composition (PC) is free from pigments, more preferably free from pigments and other additives capable of changing the natural colour of the composition.

It is particularly preferred that the polypropylene composition (PC) has a CIELAB L* value, as determined according to ISO 11664-4, in the range from 70.0 to 100.0, more preferably in the range from 75.0 to 95.0, most preferably in the range from 80.0 to 90.0.

It is also particularly preferred that the polypropylene composition (PC) has a CIELAB a* value, as determined according to ISO 11664-4, in the range from -10.0 to 10.0, more preferably in the range from -5.0 to 5.0, most preferably in the range from -2.0 to 1.0.

It is furthermore particularly preferred that the polypropylene composition (PC) has a CIELAB b* value, as determined according to ISO 11664-4, in the range from -10.0 to 10.0, more preferably in the range from -5.0 to 5.0, most preferably in the range from 0.0 to 3.0.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 20 °C and a hoop stress of 16 MPa, in the range from 1 to 1000 hours, more preferably in the range from 10 to 700 hours, most preferably in the range from 20 to 500 hours.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 20 °C and a hoop stress of 15 MPa, in the range from 10 to 5000 hours, more preferably in the range from 100 to 3000 hours, most preferably in the range from 500 to 2000 hours.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 20 °C and a hoop stress of 14.5 MPa, in the range from 20 to 20,000 hours, more preferably in the range from 400 to 10,000 hours, most preferably in the range from 1000 to 5000 hours.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 95 °C and a hoop stress of 5 MPa, in the range from 1 to 50 hours, more preferably in the range from 1.5 to 30 hours, most preferably in the range from 2 to 20 hours.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 95 °C and a hoop stress of 4.1 MPa, in the range from 100 to 50,000 hours, more preferably in the range from 1000 to 30,000 hours, most preferably in the range from 5000 to 20,000 hours.

The polypropylene composition (PC) preferably has a hydrostatic pressure resistance (HPT), determined according to ISO 1167-1 on a pipe specimen according to ISO 1167-2 having an outer diameter of 32 mm and an average wall thickness of 3.2 mm, at a temperature of 95 °C and a hoop stress of 3.8 MPa, in the range from 1000 to 50,000 hours, more preferably in the range from 3000 to 30,000 hours, most preferably in the range from 5000 to 20,000 hours.

**The monophasic propylene-ethylene random copolymer (PP)**

One essential component of the polypropylene composition (PC) is the monophasic propylene-ethylene random copolymer (PP).

The monophasic propylene-ethylene random copolymer (PP) has a melt flow rate (MFR$_2$), determined according to ISO 1133 at 230 °C at a load of 2.16 kg, in the range from 0.10 to 4.00 g/10 min, more preferably in the range from 0.15 to 1.00 g/10 min, most preferably in the range from 0.17 to 0.50 g/10 min.

The monophasic propylene-ethylene random copolymer (PP) has an ethylene content (C2), determined by quantitative $^{13}$C-NMR spectroscopy, in the range from 2.0 to 6.0 wt.-%, more preferably in the range from 2.4 to 4.0 wt.-%, most preferably in the range from 2.8 to 3.8 wt.-%, relative to the total weight of the monophasic propylene-ethylene random copolymer (PP).

The monophasic propylene-ethylene random copolymer (PP) consists of propylene and ethylene monomers, therefore the monophasic propylene-ethylene random copolymer (PP) consequently has a propylene content (C3), determined by quantitative $^{13}$C-NMR spectroscopy, in the range from 94.0 to 98.0 wt.-%, more preferably in the range from 96.0 to 97.6 wt.-% most preferably in the range from 96.2 to 97.2 wt.-%, relative to the total weight of the monophasic propylene-ethylene random copolymer (PP).

It is preferred that the monophasic propylene-ethylene random copolymer (PP) has a xylene cold soluble (XCS) content, determined according to ISO 16152, in the range from 3.0 to 15.0 wt.-%, more preferably in the range from 5.0 to 12.0 wt.-%, most preferably in the range from 7.0 to 9.0 wt.-%, relative to the total weight of the monophasic propylene-ethylene random copolymer (PP).

The monophasic propylene-ethylene random copolymer (PP) has a content of 2,1-regiodefects, as determined by $^{13}$C-NMR spectroscopy, in the range from 0.00 to 0.11 mol-%, more preferably in the range from 0.00 to 0.05 mol-%, yet more preferably in the range from 0.00 to 0.03 mol-%, most preferably the monophasic propylene-ethylene random copolymer (PP) is free from 2,1-regiodefects, i.e. 0.00 mol-%.

Being free of 2,1-regiodefects is an indication that the monophasic propylene-ethylene random copolymer (PP) has been polymerized in the presence of a Ziegler-Natta catalyst.

Therefore, it is further preferred that the monophasic propylene-ethylene random copolymer (PP) has been polymerized in the presence of a Ziegler-Natta catalyst.

The monophasic propylene-ethylene random copolymer (PP) is further defined by its relative content of isolated to block ethylene sequences, I(E).

The I(E) content is defined by equation (I):

$$I(E) = \frac{fPEP}{(fEEE + f\mathrm{PEE} + fPEP)} \times 100 \qquad \text{(I)}$$

wherein

I(E) is the relative content of isolated to block ethylene sequences [in %];
fPEP is the mol fraction of propylene/ethylene/propylene sequences (PEP) in the sample; fPEE is the mol fraction of propylene/ethylene/ethylene sequences (PEE) and of ethylene/ethylene/propylene sequences (EEP) in the sample; fEEE is the mol fraction of ethylene/ethylene/ethylene sequences (EEE) in the sample; wherein all sequence concentrations being based on a statistical triad analysis of $^{13}$C-NMR data.

This parameter is used as an indication of how random the insertion of ethylene is within the polypropylene chain.

The monophasic propylene-ethylene random copolymer (PP) has a relative content of isolated to block ethylene sequences, I(E) in the range from 45 to 80%, more preferably in the range from 55 to 77%, most preferably in the range from 65 to 75%.

**The zinc adipate (ZnAA)**

Another essential component of the polypropylene composition (PC) is zinc adipate (ZnAA).

Zinc adipate has a CAS No: 3446-35-3 and is available from many commercial suppliers.

Alternatively, zinc adipate can be prepared by methods known to the person skilled in the art.

It is preferred that the zinc adipate is obtainable by, more preferably obtained by, mixing adipic acid with a zinc source selected from the group consisting of zinc oxide, zinc hydroxide, zinc carbonate and combinations thereof.

It is further preferred that the zinc source is selected from the group consisting of zinc oxide, zinc hydroxide and combinations thereof.

In a preferred embodiment, the zinc source is zinc oxide.

In this embodiment, it is preferred that the adipic acid and the zinc oxide are mixed in a weight ratio in the range from 0.5:1 to 4:1, more preferably in the range from 1:1 to 3:1, most preferably in the range from 1.5:1 to 2.5:1.

It is particularly preferred that the mixing is dry mixing.

The zinc adipate (ZnAA) is preferably present in an amount in the range from 10 to 5000 ppm, more preferably from 100 to 3000 ppm, most preferably in the range from 500 to 2000 ppm, relative to the total weight of the polypropylene composition (PC).

**The process**

In a second aspect, the present invention is directed to a process for producing the polypropylene composition (PC) of the first aspect, comprising the steps of:

a) providing the monophasic propylene-ethylene random copolymer (PP) of the first aspect; and
b) mixing adipic acid with with a zinc source selected from the group consisting of zinc oxide, zinc hydroxide, zinc carbonate and combinations thereof thereby generating zinc adipate (ZnAA); and
c) blending and extruding the monophasic propylene-ethylene random copolymer (PP) of step a) with the zinc adipate (ZnAA) of step b) and optionally further additives (A) at a temperature in the range from 160 to 280 °C in an extruder, preferably a twin-screw extruder, thereby generating the polypropylene composition (PC), preferably in pellet form.

It is preferred that the zinc source is selected from the group consisting of zinc oxide, zinc hydroxide and combinations thereof, most preferably the zinc source is zinc oxide.

In this embodiment, it is preferred that the adipic acid and the zinc oxide are mixed in a weight ratio in the range from 0.5:1 to 4:1, more preferably in the range from 1:1 to 3:1, most preferably in the range from 1.5:1 to 2.5:1.

It is particularly preferred that the mixing is dry mixing.

All fallback positions and preferable embodiments of the polypropylene composition (PC), the monophasic propylene-ethylene random copolymer (PP), and the zinc adipate (ZnAA) of the first aspect are applicable mutatis mutandis to the polypropylene composition (PC), the monophasic propylene-ethylene random copolymer (PP), and the zinc adipate (ZnAA) of the second aspect.

**The article**

In a final aspect, the present invention is directed to an article comprising at least 90 wt.-%, relative to the total weight of the article, of the polypropylene composition (PC) of the first aspect.

Preferably the article comprises at least 95 wt.-%, more preferably at least 98 wt.-%, relative to the total weight of the article, of the polypropylene composition (PC) of the first aspect.

In one embodiment, the article consists of the polypropylene composition (PC) of the first aspect.

It is particularly preferred that the article is a pipe. More preferably, said pipe is a pressure pipe like a hot-water pipe for building installations. Equally preferably, said pipe has an outer diameter of 12.5 mm (0.5 inch) to 254 mm (10 inch) and a wall thickness of 1 mm to 12 mm.

The pipe preferably has a hydrostatic pressure resistance (HPT), determined according to ISO 1167-1 at a temperature of 20 °C and a hoop stress of 16 MPa, in the range from 1 to 1000 hours, more preferably in the range from 10 to 700 hours, most preferably in the range from 20 to 500 hours.

The pipe preferably has a hydrostatic pressure resistance (HPT), determined according to ISO 1167-1 at a temperature of 20 °C and a hoop stress of 15 MPa, in the range from 10 to 5000 hours, more preferably in the range from 100 to 3000 hours, most preferably in the range from 500 to 2000 hours.

The pipe preferably has a hydrostatic pressure resistance (HPT), determined according to ISO 1167-1 at a temperature of 20 °C and a hoop stress of 14.5 MPa, in the range from 20 to 20,000 hours, more preferably in the range from 400 to 10,000 hours, most preferably in the range from 1000 to 5000 hours.

The pipe preferably has a hydrostatic pressure resistance (HPT), determined according to ISO 1167-1 at a temperature of 95 °C and a hoop stress of 5 MPa, in the range from 1 to 50 hours, more preferably in the range from 1.5 to 30 hours, most preferably in the range from 2 to 20 hours.

The pipe preferably has a hydrostatic pressure resistance (HPT), determined according to ISO 1167-1 at a temperature of 95 °C and a hoop stress of 4.1 MPa, in the range from 100 to 50,000 hours, more preferably in the range from 1000 to 30,000 hours, most preferably in the range from 5000 to 20,000 hours.

The pipe preferably has a hydrostatic pressure resistance (HPT), determined according to ISO 1167-1 at a temperature of 95 °C and a hoop stress of 3.8 MPa, in the range from 1000 to 50,000 hours, more preferably in the range from 3000 to 30,000 hours, most preferably in the range from 5000 to 20,000 hours.

**EXAMPLES**

## 1. Measurement methods

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the ethylene-propylene copolymer.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probe head at 125°C using nitrogen gas for all pneumatics.

Approximately 200 mg of material was dissolved in 1,2-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol\text{-}\% = 100 * (P_{21e}\ /\ P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * f_E$$

The weight percent comonomer incorporation was calculated from the mole fraction:

$$E\ [wt.\text{-}\%] = 100 * (f_E * 28.06)\ /\ ((f_E * 28.06) + ((1\text{-}f_E) * 42.08)).$$

The comonomer sequence distribution at the triad level was determined using the analysis method of Kakugo et al. (Kakugo, M., Naito, Y., Mizunuma, K., Miyatake, T. Macromolecules 15 (1982) 1 150). This method was chosen for its robust nature and integration regions slightly adjusted to increase applicability to a wider range of comonomer contents.

**Melt Flow Rate**

The melt flow rate (MFR) was determined according to ISO 1133 (2022) and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**The xylene soluble fraction at room temperature (XCS, wt.-%):** The amount of the polymer soluble in xylene was determined at 25 °C according to ISO 16152 (2022).

**DSC analysis, melting temperature ($T_m$) and crystallization temperature ($T_c$):** measured with a TA Instrument Q200 differential scanning calorimetry (DSC) on 5 to 7 mg samples. DSC is run according to ISO 11357 (2023) / part 3 / method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

On the second heating curve two melting peaks are observed, the one with a higher temperature corresponds to the alpha phase and assigned as $T_{m1}$ with enthalpy of $\Delta H_{m1}$, and the one with a lower temperature corresponds to the beta phase, it is assigned as $T_{m2}$ with enthalpy of $\Delta H_{m2}$. For a given comonomer content, the person skilled in the art can straightforwardly determine which peak belongs to the alpha phase and which peak belongs to the beta phase.

The beta phase content was determined using the following calculation:

$$Beta\ phase\ content\ (DSC) = \frac{[\Delta Hm2]}{([\Delta Hm1] + [\Delta Hm2])} \times 100\%$$

**CIELAB**

The method was used for measurement of color on flakes and complies with ISO 11664-4 (2019). With a spectrophotometer, the 3 standard color value values X, Y and Z are measured, which are used to calculate the CIE L*, a*, b* and its color distances.

**The Flexural Modulus** was determined according to ISO 178 (2019) method A (3-point bending test) on $80 \times 10 \times 4 \ mm^3$ specimens. Following the standard, a test speed of 2 mm/min and a span length of 16 times the thickness was used. The testing temperature was $23 \pm 2°$ C. Injection moulding was carried out according to ISO 19069-2 (2016) using a melt temperature of 255°C for all materials irrespective of material melt flow rate.

**Notched impact strength (NIS)**

The Charpy notched impact strength (NIS) was measured according to ISO 179 1eA (2023) at +23°C, using injection moulded bar test specimens of $80 \times 10 \times 4 \ mm^3$ specimens. Injection moulding was carried out according to ISO 19069-2 (2016) using a melt temperature of 255°C for all materials irrespective of material melt flow rate.

**Wide angle X-ray Scattering measurement (WAXS)**

The measurement of wide-angle X-ray scattering (WAXS) of the samples was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and $2\theta$ angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined by the area under the crystalline curve and the original spectrum using Challa, Hermans and Weidinger method [Challa F, Hermans PH, Weidinger A, Makromol. Chem. 56, 169 (1962)] as:

$$Xc = \frac{area \ under \ crystalline \ curve}{area \ under \ original \ spectrum} \times 100\%$$

The amount of $\beta$-form of the polypropylene within the crystalline phase $K_\beta$ was calculated using the Jones method [Turner-Jones A, Aizlewood JM, Beckett DR, Makromol. Chem. 75, 134 (1974)] according to the following equation (modified to be expressed as a percentage):

$$K_\beta = \frac{I^\beta(300)}{I^\alpha(110) + I^\alpha(040) + I^\alpha(130) + I^\beta(300)} \times 100\%$$

where, $I^\beta(300)$ is the intensity of $\beta(300)$ peak, $I^\alpha(110)$ is the intensity of $\alpha(110)$ peak, $I^\alpha(040)$ is the intensity of $\alpha(040)$ peak and $I^\alpha(130)$ is the intensity of $\alpha(130)$ peak obtained after subtracting the amorphous halo.

The amount of $\gamma$-form of isotactic polypropylene (iPP) within the crystalline phase $K_\gamma$ was calculated using the method developed by Pae [Pae KD, J. Polym. Sci. , Part A, 6, 657 (1968)] (modified to be expressed as a percentage) as:

$$K_\gamma = \frac{I^\gamma(117)}{I^\alpha(130) + I^\gamma(117)} \times 100\%$$

where, $I^\alpha(130)$ is the intensity of $\alpha(130)$ peak and $I^\gamma(117)$ is the intensity of y(117) peak obtained after subtracting a base line joining the base of these peaks.

Measurements were performed on samples prepared in TA Instrument Q200 differential scanning calorimetry (DSC) machine. 5-7 mg of sample were sealed in an Al pan and heated to 225°C with a heating rate of 10°C/min, hold for 5min to erase the thermal history, and then it is cool down to 25°C with 10°C/min. The resultant sample is then used for WAXS measurement.

**Pipe pressure test**

The pressure test performance of pipes produced from beta nucleated polypropylene was tested in accordance with ISO 1167-1 and-2 (2006). The pipe having a diameter of 32 mm and a wall thickness of 3 mm was produced in accordance with ISO 1167-2 (2006) on a conventional pipe extrusion line (Battenfeld-Cincinnati GmbH). The extruder temperature has been set at 180-225°C, the melt temperature was 200-230°C and has been recorded after 120 min of process stabilization. The line has been run at a constant throughput of 50 kg/h. The resultant pipe was then subjected to various circumferential (hoop) stress (expressed in MPa) at various temperatures (expressed in °C) in a water-in-water setup in accordance with ISO 1167-1 (2006). The time in hours to failure was registered, times with an additional "still running" meaning that the failure time had not yet been reached at the time of filing of the present patent application.

**B. Experimental**

**1. Polymerization of the propylene-ethylene random copolymer (PP)**

The PP used is prepared on a Borstar pilot plant, with the configuration of prepolymerizer-loop-loop configuration. As the catalyst, the Ziegler-Natta-catalyst system ZN180-2M, commercially available from LyondellBasell Industries, was used. As a cocatalyst, triethylaluminium (TEAL) was used, whilst the external donor was donor D (dicyclopentyldimethoxysilane). The polymerization conditions are shown in Table 1.

**Table 1** Polymerization conditions of the propylene-ethylene random copolymer (PP)

| | | **PP** |
|---|---|---|
| **Prepolymerizer** | | |
| Temperature | [°C] | 20 |
| Pressure | [kPa] | 5464 |
| Catalyst feeding rate | [g/h] | 0.7 |
| Teal | [g/tC3] | 150 |
| Donor | [g/tC3] | 40 |
| Residence time | [h] | 0.4 |
| **Loop 1** | | |
| Temperature | [°C] | 67 |
| Pressure | [kPa] | 5437 |
| Feed $H_2$ | [ppm] | 180 |
| Feed C2/C3 | [mol/kmol] | 9.7 |
| $MFR_2$ | [g/10min] | 0,06 |
| C2 | [wt.-%] | 4.2 |
| Split | [wt.-%] | 61 |
| Loop 2 | | |
| Temperature | [°C] | 67 |
| Pressure | [kPa] | 5437 |
| Feed $H_2$ | [ppm] | 700 |
| Feed C2/C3 | [mol/kmol] | 3.2 |
| MFR | g/10min | 0.24 |
| Split | [wt.-%] | 39 |
| XCS | [wt.-%] | 7.9 |
| C2 | [wt.-%] | 3.1 |
| I(E) | % | 71 |

(continued)

| Loop 2 | | |
|---|---|---|
| 2,1 regiodefects | mol-% | 0.0 |

## 2. Preparation of Zn-based beta nucleating agents NU1 to NU3

The preparation of NU1 to NU3 were carried out using a ball miller at room temperature for 10 min. The resultant mixture was used in the following experiments as is. Several repetitions of the ball milling were carried to obtain sufficient amount of each of NU1 to NU3.

Details of each nucleating agent preparation:

**NU1:** Pimelic acid /ZnO 2:1: 5g of Pimelic acid (CAS 111-16-0, Sigma-Aldrich) and 2.5 g of ZnO (ZINKOXYD AKTIV, Lanxess) were ball milled in a ball miller, with 10min.

**NU2:** adipic acid/ZnO 2:1: as the NU1 process, except the acid is adipic acid (CAS 124-04-9, supplier by BASF).

**NU3:** adipic acid/ZnO 1:1: as the NU2 process, except the weight ratio of adipic acid to ZnO is adjusted to 1: 1 w/w.

## 3. Compounding of inventive and comparative examples

The inventive and comparative examples were compounded in a ZSK twin screw extruder with a melt temperature of 210 °C and a throughput rate of 7 kg/h, according to the recipes given in Table 2:

**Table 2:** Recipes of the inventive and comparative examples

| | | CE1 | CE2 | CE3 | IE1 | IE2 |
|---|---|---|---|---|---|---|
| PP | [wt%] | 99.13 | 99.12 | 99.03 | 99.03 | 99.03 |
| NU1 | [wt%] | - | - | 0.10 | - | - |
| NU2 | [wt%] | - | - | - | 0.10 | - |
| NU3 | [wt%] | - | - | - | - | 0.10 |
| NU4 | [wt%] | - | 0.01 | - | - | - |
| AO1 | [wt%] | 0.50 | 0.50 | 0.50 | 0.50 | 0.50 |
| AO2 | [wt%] | 0.20 | 0.20 | 0.20 | 0.20 | 0.20 |
| AO3 | [wt%] | 0.10 | 0.10 | 0.10 | 0.10 | 0.10 |
| SHT | [wt%] | 0.07 | 0.07 | 0.07 | 0.07 | 0.07 |

NU4    CGNA-7588 (quino[2,3-b]acridine-6,7,13,14(5H,12H)-tetrone, CAS No: 1503-48-6), commercially available from BASF SE.

AO1    Irganox 1330 (1,3,5-tri-methyl-2,4,6-tris-(3,5-di-tert. butyl-4-hydroxyphenyl) benzene, CAS No: 1709-70-2), commercially available from BASF SE

AO2    Irganox 1010 (pentaerythritol tetrakis[3-[3,5-di-tert-butyl-4-hydroxyphenyl]propionate], CAS No: 6683-19-8), commercially available from BASF SE.

AO3    Irgafos 168 (tris(2,4-ditert-butylphenyl)phosphite, CAS No: 31570-04-4), commercially available from BASF SE.

SHT    synthetic hydrotalcite, commercially available from Kisuma Chemicals under the trade name DHT-4A

**Table 3:** Properties of the inventive and comparative examples

| | | CE1 | CE2 | CE3 | IE1 | IE2 |
|---|---|---|---|---|---|---|
| $MFR_2$ | [g/10min] | 0.24 | 0.30 | 0.26 | 0.26 | 0.22 |
| Flex Mod | [MPa] | 950 | 771 | n.m. | 856 | 907 |
| Charpy NIS (23°C) | [kJ/m$^2$] | 12.2 | 47.9 | n.m. | 42.8 | 13.4 |
| **DSC** | | | | | | |
| $T_c$ | [°C] | 105 | 109 | 106 | 109 | 109 |
| $T_{m1}$ | [°C] | 147 | 152 | 145 | 150 | 147 |
| $\Delta H_{m1}$ | [J/g] | 71 | 18 | 36 | 24 | 36 |
| $T_{m2}$ | [°C] | n.d. | 136 | 133 | 135 | 134 |
| $\Delta H_{m2}$ | [J/g] | n.d. | 61 | 44 | 59 | 55 |
| $[\Delta H_{m2}]/([\Delta H_{m1}]+[\Delta H_{m2}])$ | [-] | 0 | 77.2 | 55.0 | 76.6 | 69.5 |
| **WAXS** | | | | | | |
| Xc | [%] | 58.7 | 56.2 | n.m. | 56.4 | 57.3 |
| $K_\beta$ | [%] | 2 | 85 | n.m. | 84 | 69 |
| $K_\gamma$ | [%] | 31 | 7 | n.m. | 7 | 10 |
| **CIELAB** | | | | | | |
| L* | [-] | n.m. | 67.4 | n.m. | 82.7 | 82.0 |
| a* | [-] | n.m. | 15.3 | n.m. | -1.0 | -1.0 |
| b* | [-] | n.m. | 38.1 | n.m. | 1.5 | 2.0 |
| n.d. - not detected, n.m. - not measured. | | | | | | |

As can be seen from Table 3 (see CE2), although NU4 is an efficient beta nucleating agent, it is also a strong orange dye, affecting the colouring of the resultant compositions, which limits the application of this nucleating agent to strongly coloured compositions.

NU1 to NU3 are each beta nucleating agents that do not affect the colour of the nucleated compositions. NU1 (see CE1), which is a zinc pimelate, is not an effective nucleating agent for C3C2 random copolymers (see $[\Delta H_{m2}]/([\Delta H_{m1}]+[\Delta H_{m2}])$, $T_c$ and $T_m$). On the other hand, the zinc adipate nucleating agents NU2 and NU3 are much more effective, achieving similar levels of beta nucleating to NU4 without the undesired colouring effect.

As a further test, a pipe specimen was prepared from IE1 according to the conditions provided in the determination methods.

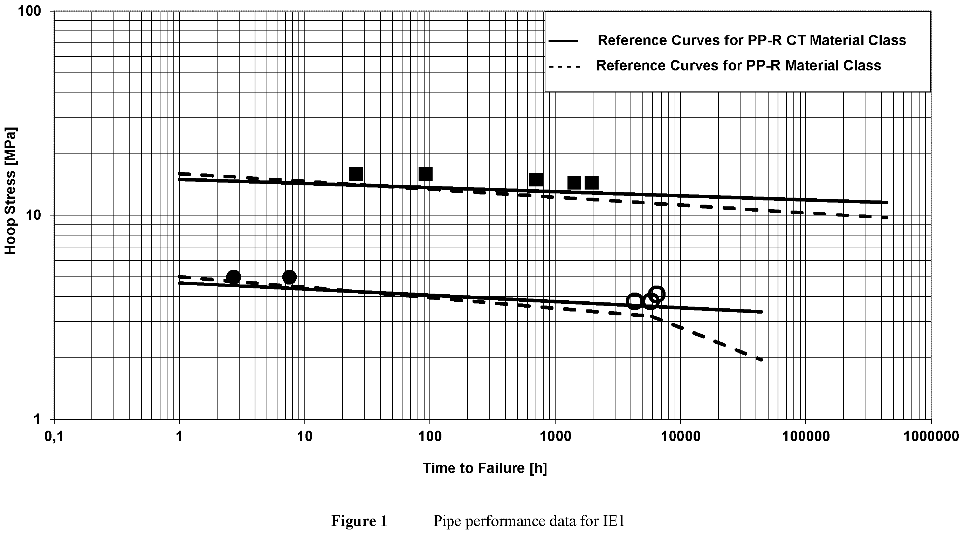

The hoop stress - time curve is shown in Figure 1. As can be seen, this excellent pipe performance meets the pressure resistance requirements of PP-RCT pipes defined in EN ISO 15874-2 (2023).

- 20°C, ductile failure
- 95°C, ductile failure
- ∘ 95°C, test still running

## Claims

1. A polypropylene composition (PC) comprising:

a) a monophasic propylene-ethylene random copolymer (PP) having:

i) a melt flow rate ($MFR_2$), determined according to ISO 1133 at 230 °C at a load of 2.16 kg, in the range from 0.10 to 4.00 g/10 min;
ii) a content of 2,1-regiodefects, as determined by $^{13}$C-NMR spectroscopy, in the range from 0.00 to 0.11 mol-%;

iii) an ethylene content (C2), determined by quantitative $^{13}$C-NMR spectroscopy, in the range from 2.0 to 6.0 wt.-%, relative to the total weight of the monophasic propylene-ethylene random copolymer (PP);

iv) a relative content of isolated to block ethylene sequences, I(E), in the range from 45 to 80%,

wherein the I(E) content is defined by equation (I):

$$I(E) = \frac{fPEP}{(fEEE + f\mathrm{PEE} + fPEP)} \times 100 \quad (I)$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/-propylene sequences (EEP) in the sample;

fEEE is the mol fraction of ethylene/ethylene/ethylene sequences (EEE) in the sample;

wherein all sequence concentrations being based on a statistical triad analysis of $^{13}$C-NMR data, and

b) zinc adipate (ZnAA).

2. The polypropylene composition (PC) according to claim 1, wherein the zinc adipate (ZnAA) is present in an amount in the range from 10 to 5000 ppm, more preferably from 100 to 3000 ppm, most preferably in the range from 500 to 2000 ppm, relative to the total weight of the polypropylene composition (PC).

3. The polypropylene composition (PC) according to claim 1 or claim 2, wherein the monophasic propylene-ethylene random copolymer (PP) has a xylene cold soluble (XCS) content, determined according to ISO 16152, in the range from 3.0 to 15.0 wt.-%, more preferably in the range from 5.0 to 12.0 wt.-%, most preferably in the range from 7.0 to 9.0 wt.-%, relative to the total weight of the monophasic propylene-ethylene random copolymer (PP).

4. The polypropylene composition (PC) according to any one of the preceding claims, wherein the monophasic propylene-ethylene random copolymer (PP) has a melt flow rate (MFR$_2$), determined according to ISO 1133 at 230 °C at a load of 2.16 kg, in the range from 0.15 to 1.00 g/10 min, most preferably in the range from 0.17 to 0.50 g/10 min.

5. The polypropylene composition (PC) according to any one of the preceding claims, wherein the monophasic propylene-ethylene random copolymer (PP) has an ethylene content (C2), determined by quantitative $^{13}$C-NMR spectroscopy, in the range from 2.4 to 4.0 wt.-%, most preferably in the range from 2.8 to 3.8 wt.-% , relative to the total weight of the monophasic propylene-ethylene random copolymer (PP).

6. The polypropylene composition (PC) according to any one of the preceding claims, wherein the monophasic propylene-ethylene random copolymer (PP) has been produced in the presence of a Ziegler-Natta catalyst (ZN).

7. The polypropylene composition (PC) according to any one of the preceding claims, wherein the zinc adipate (ZnAA) has been prepared by mixing adipic acid with a zinc source selected from the group consisting of zinc oxide, zinc hydroxide, zinc carbonate and combinations thereof, more preferably from the group consisting of zinc oxide, zinc hydroxide and combinations thereof.

8. The polypropylene composition (PC) according to claim 7, wherein the mixing is dry mixing.

9. The polypropylene composition (PC) according to any one of the preceding claims, having one or more, preferably all, of the following properties:

a) a CIELAB L* value, as determined according to ISO 11664-4, in the range from 70.0 to 100.0, more preferably in the range from 75.0 to 95.0, most preferably in the range from 80.0 to 90.0;

b) a CIELAB a* value, as determined according to ISO 11664-4, in the range from -10.0 to 10.0, more preferably in the range from -5.0 to 5.0, most preferably in the range from -2.0 to 1.0, and/or

c) a CIELAB b* value, as determined according to ISO 11664-4, in the range from -10.0 to 10.0, more preferably in the range from -5.0 to 5.0, most preferably in the range from 0.0 to 3.0.

10. The polypropylene composition (PC) according to any one of the preceding claims, having a crystallisation temperature ($T_c$), determined according to ISO 11357, in the range from 107.0 to 120.0 °C, more preferably in the range from 107.0 to 116.0 °C, most preferably in the range from 108.0 to 112.0 °C.

11. The polypropylene composition (PC) according to any one of the preceding claims, having a beta phase content (DSC), as determined according to the procedure given in the determination methods, in the range from 60 to 90%, more preferably in the range from 65 to 85%, most preferably in the range from 68 to 80%.

12. The polypropylene composition (PC) according to any one of the preceding claims, having a beta phase content ($K_\beta$), determined by wide angle x-ray scattering (WAXS) on a specimen as defined in the determination methods, in the range from 60 to 99%, more preferably in the range from 63 to 95%, most preferably in the range from 65 to 90%.

13. The polypropylene composition (PC) according to any one of the preceding claims, having a crystallinity index Xc, determined by wide angle x-ray scattering (WAXS) on a specimen as defined in the determination methods in the range from 50 to 70%, more preferably in the range from 53 to 65%, most preferably in the range from 55 to 60%.

14. A process for producing the polypropylene composition (PC) according to any one of the preceding claims, comprising the steps of:

    a) providing a monophasic propylene-ethylene random copolymer (PP) as defined in claim 1, 3, 4, 5 or 6; and
    b) mixing adipic acid with with a zinc source selected from the group consisting of zinc oxide, zinc hydroxide, zinc carbonate and combinations thereof, thereby generating zinc adipate (ZnAA); and
    c) blending and extruding the monophasic propylene-ethylene random copolymer (PP) of step a) with the zinc adipate (ZnAA) of step b) and optionally further additives (A) at a temperature in the range from 160 to 280 °C in an extruder, preferably a twin-screw extruder, thereby generating the polypropylene composition (PC), preferably in pellet form.

15. An article, more preferably a pipe, comprising at least 90 wt.-%, relative to the total weight of the article, of the polypropylene composition (PC) according to any one of the preceding claims.

**Figure 1** Pipe performance data for IE1

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 063 194 B1 (GRACE W R & CO [US]) 8 December 2021 (2021-12-08) * paragraph [0036] * * examples 1-3 * * claims 1-15 * | 1-15 | INV. C08F2/00 C08K5/098 C08L23/14 C08F210/06 |
| A | EP 2 386 604 A1 (BOREALIS AG [AT]) 16 November 2011 (2011-11-16) * PP1; table 1 * * IE1; table 3 * * claims 1-16 * | 1-15 | |
| Y | KR 101 696 943 B1 (DOW GLOBAL TECHNOLOGIES LLC [US]) 16 January 2017 (2017-01-16) * paragraphs [0131], [0181] * * Polymer 1; table 3 * * claims 1-12 * | 1-15 | |
| A | US 10 202 475 B2 (BOREALIS AG [AT]) 12 February 2019 (2019-02-12) * tables 1, 2 * * claims 1-10 * | 1-15 | TECHNICAL FIELDS SEARCHED (IPC) C08F C08K C08L |
| Y | YANG YAODING ET AL: "Nucleation effects of zinc adipate as [beta]-Nucleating agent in ethylene-propylene block copolymerized polypropylene", JOURNAL OF POLYMER RESEARCH, SPRINGER NETHERLANDS, DORDRECHT, vol. 24, no. 9, 17 August 2017 (2017-08-17), pages 1-10, XP036300107, ISSN: 1022-9760, DOI: 10.1007/S10965-017-1300-X [retrieved on 2017-08-17] * "Results and discussion" * | 1-15 | |

The present search report has been drawn up for all claims

| Place of search | Date of completion of the search | Examiner |
|---|---|---|
| Munich | 7 January 2025 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 18 9156

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | | Publication date | Patent family member(s) | | Publication date |
|---|---|---|---|---|---|
| EP 3063194 | B1 | 08-12-2021 | BR | 112016009801 B1 | 08-06-2021 |
| | | | CN | 105849141 A | 10-08-2016 |
| | | | EP | 3063194 A1 | 07-09-2016 |
| | | | KR | 20160079825 A | 06-07-2016 |
| | | | PL | 3063194 T3 | 31-01-2022 |
| | | | RU | 2016120731 A | 05-12-2017 |
| | | | SG | 11201603120R A | 30-05-2016 |
| | | | US | 2016251462 A1 | 01-09-2016 |
| | | | WO | 2015065990 A1 | 07-05-2015 |
| EP 2386604 | A1 | 16-11-2011 | AU | 2011244480 A1 | 08-11-2012 |
| | | | CN | 102869719 A | 09-01-2013 |
| | | | EP | 2386604 A1 | 16-11-2011 |
| | | | ES | 2710606 T3 | 26-04-2019 |
| | | | KR | 20120138834 A | 26-12-2012 |
| | | | RU | 2012148590 A | 27-05-2014 |
| | | | US | 2013236668 A1 | 12-09-2013 |
| | | | WO | 2011131578 A1 | 27-10-2011 |
| KR 101696943 | B1 | 16-01-2017 | BR | PI0918348 A2 | 22-08-2017 |
| | | | BR | PI0918691 B1 | 14-01-2020 |
| | | | BR | PI0918697 A2 | 29-08-2017 |
| | | | BR | PI0918706 A2 | 11-09-2018 |
| | | | BR | PI0918707 A2 | 07-02-2017 |
| | | | CN | 102325809 A | 18-01-2012 |
| | | | CN | 102333749 A | 25-01-2012 |
| | | | CN | 102333796 A | 25-01-2012 |
| | | | CN | 102482376 A | 30-05-2012 |
| | | | CN | 102741341 A | 17-10-2012 |
| | | | CN | 105037590 A | 11-11-2015 |
| | | | EP | 2373604 A2 | 12-10-2011 |
| | | | EP | 2373699 A1 | 12-10-2011 |
| | | | EP | 2373701 A1 | 12-10-2011 |
| | | | EP | 2373703 A1 | 12-10-2011 |
| | | | EP | 2373732 A1 | 12-10-2011 |
| | | | JP | 5461583 B2 | 02-04-2014 |
| | | | JP | 5607647 B2 | 15-10-2014 |
| | | | JP | 5731988 B2 | 10-06-2015 |
| | | | JP | 5770103 B2 | 26-08-2015 |
| | | | JP | 5969210 B2 | 17-08-2016 |
| | | | JP | 6066968 B2 | 25-01-2017 |
| | | | JP | 6097435 B2 | 15-03-2017 |
| | | | JP | 2012514122 A | 21-06-2012 |
| | | | JP | 2012514123 A | 21-06-2012 |
| | | | JP | 2012514124 A | 21-06-2012 |
| | | | JP | 2012514126 A | 21-06-2012 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 18 9156

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| | | JP 2012514599 A | 28-06-2012 |
| | | JP 2015042743 A | 05-03-2015 |
| | | JP 2016172868 A | 29-09-2016 |
| | | KR 20110100311 A | 09-09-2011 |
| | | KR 20110110270 A | 06-10-2011 |
| | | KR 20110110272 A | 06-10-2011 |
| | | KR 20110110273 A | 06-10-2011 |
| | | KR 20110117124 A | 26-10-2011 |
| | | MX 342632 B | 07-10-2016 |
| | | MY 155383 A | 15-10-2015 |
| | | MY 156636 A | 15-03-2016 |
| | | MY 159677 A | 13-01-2017 |
| | | MY 159688 A | 13-01-2017 |
| | | MY 159689 A | 13-01-2017 |
| | | RU 2011132063 A | 10-02-2013 |
| | | RU 2011132064 A | 10-02-2013 |
| | | RU 2011132141 A | 10-02-2013 |
| | | RU 2011132147 A | 10-02-2013 |
| | | RU 2011132149 A | 10-02-2013 |
| | | SG 172438 A1 | 28-07-2011 |
| | | SG 172446 A1 | 29-08-2011 |
| | | SG 172448 A1 | 29-08-2011 |
| | | SG 172449 A1 | 29-08-2011 |
| | | SG 172819 A1 | 29-08-2011 |
| | | US 2010168342 A1 | 01-07-2010 |
| | | US 2010168353 A1 | 01-07-2010 |
| | | US 2010173769 A1 | 08-07-2010 |
| | | US 2010174105 A1 | 08-07-2010 |
| | | US 2010197874 A1 | 05-08-2010 |
| | | US 2013041113 A1 | 14-02-2013 |
| | | US 2014274668 A1 | 18-09-2014 |
| | | WO 2010078479 A1 | 08-07-2010 |
| | | WO 2010078480 A1 | 08-07-2010 |
| | | WO 2010078485 A1 | 08-07-2010 |
| | | WO 2010078503 A1 | 08-07-2010 |
| | | WO 2010078512 A2 | 08-07-2010 |
| US 10202475 B2 | 12-02-2019 | AU 2014301234 A1 | 10-12-2015 |
| | | CN 105722912 A | 29-06-2016 |
| | | EP 3013902 A1 | 04-05-2016 |
| | | ES 2711147 T3 | 30-04-2019 |
| | | RU 2016100203 A | 31-07-2017 |
| | | US 2016145366 A1 | 26-05-2016 |
| | | WO 2014206950 A1 | 31-12-2014 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0177961 A2
- WO 2008074494 A1

**Non-patent literature cited in the description**

- **XIAO W. et al.** *J. Appl. Polym. Sci.*, 2009, vol. 111, 1076-1085
- **BUSICO, V** ; **CIPULLO, R**. *Prog. Polym. Sci.*, 2001, vol. 26, 443
- **BUSICO, V** ; **CIPULLO, R** ; **MONACO, G** ; **VACA-TELLO, M.** ; **SEGRE, A.L.** *Macromolecules*, 1997, vol. 30, 6251
- **ZHOU, Z** ; **KUEMMERLE, R** ; **QIU, X.** ; **REDWINE, D.** ; **CONG, R** ; **TAHA, A.** ; **BAUGH, D.** ; **WINNIFORD, B**. *J. Mag. Reson.*, 2007, vol. 187, 225
- **BUSICO, V** ; **CARBONNIERE, P.** ; **CIPULLO, R** ; **PELLECCHIA, R** ; **SEVERN, J.** ; **TALARICO, G.** *Macromol. Rapid Commun.*, 2007, vol. 28, 11289
- **RESCONI, L** ; **CAVALLO, L.** ; **FAIT, A** ; **PIEMONTE-SI, F**. *Chem. Rev.*, 2000, vol. 100, 1253
- **WANG, W-J** ; **ZHU, S.** *Macromolecules*, 2000, vol. 33, 1157
- **CHENG, H. N**. *Macromolecules*, 1984, vol. 17, 1950
- **BUSICO, V** ; **CIPULLO, R.** *Prog. Polym. Sci.*, 2001, vol. 26, 443
- **BUSICO, V** ; **CIPULLO, R** ; **MONACO, G** ; **VACA-TELLO, M** ; **SEGRE, A.L**. *Macromolecules*, 1997, vol. 30, 6251
- **RESCONI, L** ; **CAVALLO, L** ; **FAIT, A.** ; **PIEMONTE-SI, F**. *Chem. Rev.*, 2000, vol. 100, 1253
- **KAKUGO, M.** ; **NAITO, Y** ; **MIZUNUMA, K** ; **MIYATAKE, T.** *Macromolecules*, 1982, vol. 15, 150
- **CHALLA F** ; **HERMANS PH** ; **WEIDINGER A**. *Makromol. Chem.*, 1962, vol. 56, 169
- **TURNER-JONES A** ; **AIZLEWOOD JM** ; **BECKETT DR**. *Makromol. Chem.*, 1974, vol. 75, 134
- **PAE KD**. *J. Polym. Sci.*, 1968, vol. 6, 657
- *CHEMICAL ABSTRACTS*, 111-16-0
- *CHEMICAL ABSTRACTS*, 124-04-9
- *CHEMICAL ABSTRACTS*, 1503-48-6
- *CHEMICAL ABSTRACTS*, 1709-70-2
- *CHEMICAL ABSTRACTS*, 6683-19-8
- *CHEMICAL ABSTRACTS*, 31570-04-4